# EUROPEAN PATENT APPLICATION

(11) **EP 0 882 943 A1**
(43) Date of publication of application: **09.12.1998**
(21) Application number: 98850097.1
(22) Date of filing: 03.06.1998
(51) Int. Cl.: G01B 7/30

(54) **"Device for determining a momentary angular position"**

(30) Priority: 05.06.1997 SE 9702162
(71) Applicant: Aktiebolaget SKF, S-415 50 Göteborg (SE)
(72) Inventor: Johansson, Per-Olof, 444 65 Björlanda (SE); Bildtsén, Christian, 443 35 Lerum (SE); Lindgren, Björn, 414 78 Göteborg (SE)
(74) Representative: Westman, P. Börje I.

(57) **Abstract**

Device for determining a momentary angular position of a rotatable element (4), said device comprising distance detecting means (3) fixed to a first machine element (8) and a distance element (1, 2) fixed to a second machine element (4), one of said first and second machine elements (8, 4) being said rotatable element (4). The device is characterized in, that said distance steadily increases or steadily decreases along one revolution of said rotary element, with the exception of a leap (5, 6) arranged on said distance element (1, 2), said leap (5, 6) generating a distance discontinuity.

## Description

### TECHNICAL FIELD

The invention relates to a device for determining a momentary angular position of a rotatable element, said device comprising distance detecting means fixed to a first machine element or a distance element fixed to a second machine element, one of said first and second machine elements being said rotatable element.

### BACKGROUND OF THE INVENTION

In many applications it is often desired to know the angular position of a rotatable element, such as a shaft.

There are previous solutions addressing the problem of measuring rotation of elements. They are often based on magnets fixed to a rotating element. As the element rotates, a magnetic sensor senses the changes in the magnetic field generated by the magnet fixed to the rotating element.

The UK Patent Application, GB 2 062 875, with the title "Rotation and axial displacement transducers", presents a transducer for providing a signal representative of the speed of rotation and axial setting of an axially movable component. The transducer comprises a member rotatable with and axially movable with the component, a sensor positioned adjacent the surface of the member, the surface having a generally conical portion. The distance of which from the sensor varies with the axial position of the component and a projection and a slot. The distances of which from the sensor remain constant. The signal produced by the sensor has a repetition frequency which depends upon the speed of rotation and high and low levels depending upon the distances of the projection and slot from the sensor.

Compared to the UK Patent Application described above, which gives the speed of rotation and axial setting of an axially movable component, a major difference is that the present invention determines the momentary angular position of a rotatable element. Also, the present invention offers the possibility to rotate a rotatable element a predetermined angle.

### PURPOSE OF THE INVENTION AND ITS MOST CHARACTERISING PARTS

The purpose of the present invention is to determine a momentary angular position of a rotatable element. This scope also covers angular positioning of a rotatable element. The present invention can be used in a variety of fields such as providing information concerning the number of revolutions in an electrical motor, giving flow directions of fluids, e.g. wind directions.

A characteristic of the present invention is that the distance between a distance element and a distance detecting means steadily increases or steadily decreases along one revolution of the rotatable element, with the exception of a leap arranged on the distance element, which generates a distance discontinuity.

### DESCRIPTION OF THE DRAWINGS

Figure 1 shows a cross-sectional view of a first embodiment of the invention.

Figure 2 shows a side view of a second embodiment of the invention.

### DESCRIPTION OF TWO PREFERRED EMBODIMENTS

Two preferred embodiments are presented. In both embodiments, the distance element 1, 2 is designed in such a way that the distance between the distance element 1, 2 and the distance detecting means 3 steadily increases or steadily decreases along one revolution of the rotatable element 4, with the exception of a leap 5, 6 arranged on said distance element 1, 2, which generates a distance discontinuity. Both embodiments also include a distance detecting means 3, which measures the distance between said means 3 and the distance element 1, 2 at one point. Needless to say, the invention can be used regardless of rotational direction.

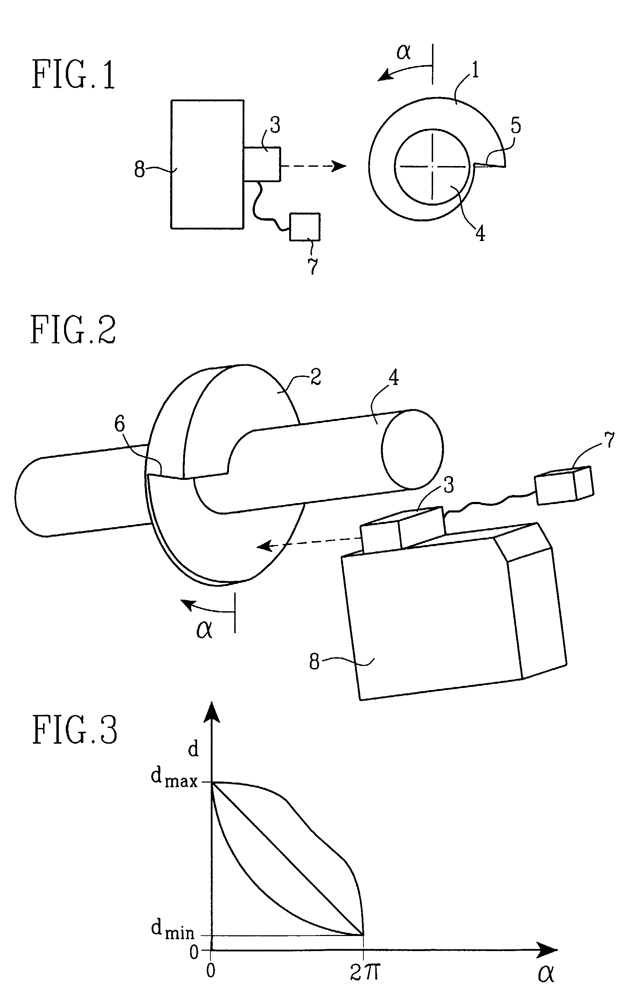

The first embodiment, which is presented in Fig. 1, relates to a rotatable element 4, which angular position is desired to be measured. A distance detecting means 3 measures the distance from said means 3 to the distance element 1. The distance element 1, which is arranged on the rotatable element 4, is a ring with varying radius. The radius varies as described above. As the rotatable element 4 rotates the distance detecting means 3 measures the distance. The distance detecting means 3 provides an output signal to a computing means 7, which computes the momentary angular position by e.g. using a look-up table. A look-up table, comprising data relating a distance to an angle, offers an effective means for obtaining the angle.

The second embodiment, which is presented in Fig. 2, also relates to a rotatable element 4, which angular position is desired to be measured. Due to the great similarities of the two embodiments only the differences are presented. The distance element 2 is a flange with varying thickness. In this embodiment the distance detecting means 3 detects the distance parallel to the rotatable element 4 and not as in the first embodiment; perpendicularly to the rotatable element 4.

After the computing means 7 has computed the momentary angular position, it can be used to accomplish a number of data, such as rotational speed, acceleration and number of revolutions with suitable means. This requires that the distance between the distance element 1, 2, which is fixed to a second machine element 4, and the distance detecting means 3, which is fixed to a first machine element 8, is measured on a continuous basis. However, it is also possible to use the device according to the invention on a non continuous basis.

In both embodiments, the distance element 1, 2 is not manufactured integrally with the element 4, which in these embodiments is a rotatable element. However, the distance element 1, 2 can be manufactured integrally with the element 4.

It should be noted that it is important that the difference between the maximum and the minimum distance detected by the distance detecting means 3 is considerably greater than the play, which in the two embodiments is radial and/or axial, in order to increase the accuracy of the momentary angular position.

The distance element 1, 2 can be designed in different ways. In figure 3 three examples of distance variations between the distance detecting means 3 and the distance element 1, 2 are presented. Starting at the leap 5, 6, one revolution of the rotatable element 4 corresponds to 2π and dₘᵢₙ and dₘₐₓ corresponds to the minimum distance respectively the maximum distance between the distance element 1, 2 and the distance detecting means 3.

It should also be noted that the rotatable element 4 not has to rotate a full or a part of a revolution in order to work, since a purpose of the invention is to give a momentary angular position of a rotatable element 4, which very well can be done even if the rotatable element 4 is not moving.

The two embodiments above present a distance element 1, 2 arranged on a rotatable element 4 and a distance detecting means 3 fixed to a first machine element 8. However, it should be noted that the distance detecting means 3 very well can be arranged on the rotatable element 4 and the distance element 1, 2 can be fixed to the first machine element 8.

Most available detecting means 3 are suitable for obtaining the purpose of this invention. The measuring can be based on magnetism, optics or electricity. Also, the measuring is performed with a specific frequency, which is preferably greater than the rotation speed of the rotatable element 4.

## Claims

1. Device for determining a momentary angular position of a rotatable element (4), said device comprising distance detecting means (3) fixed to a first machine element (8) and a distance element (1, 2) fixed to a second machine element (4), one of said first and second machine elements (8, 4) being said rotatable element (4),
**characterized in**,
that said distance steadily increases or steadily decreases along one revolution of said rotary element, with the exception of a leap (5, 6) arranged on said distance element (1, 2), said leap (5, 6) generating a distance discontinuity.

2. Device according to claim 1,
**characterized in**,
that said distance detecting means (3) is arranged to operate on a continuous basis.

3. Device according to claim 1,
**characterized in**,
that said distance element (1, 2) is manufactured integrally with said second machine element (4).

4. Device according to claim 1,
**characterized in**,
that said distance element (1) is a ring with varying radius.

5. Device according to claim 1,
**characterized in**,
that said distance element (2) is a flange with varying thickness.
